# FASCICULE DE BREVET EUROPEEN

(11) **EP 4 018 268 B1**
(45) Date de publication et mention de la délivrance du brevet: **04.09.2024**
(21) Numéro de dépôt: 20751580.0
(22) Date de dépôt: 12.08.2020
(51) Int. Cl.: G04B 31/06, G04B 31/04

(54) **PROCÉDÉ DE FABRICATION D'UN PALIER HORLOGER**
VERFAHREN ZUR HERSTELLUNG EINES UHRENLAGERS
METHOD FOR MANUFACTURING A TIMEPIECE BEARING

(30) Priorité: 19.08.2019 EP 19192401; 07.04.2020 EP 20168538
(43) Date de publication de la demande: 29.06.2022
(73) Titulaire: ROLEX SA, 1211 Genève 26 (CH)
(72) Inventeur: CARRENO, William, 1202 Genève (CH); LINCK, Vannina, 74160 SAINT-JULIEN-EN-GENEVOIS (FR); OLIVEIRA, Alexandre, 74800 Amancy (FR); MOREAUX, Cédric, 39220 Les Rousses (FR)
(74) Mandataire: Moinas & Savoye SARL
(86) Numéro de dépôt international: PCT/EP2020/072569
(87) Numéro de publication internationale: WO 2021/032552

(56) Documents cités:
- EP-A1- 2 778 801
- EP-A1- 3 067 757
- EP-A1- 3 483 665
- EP-A1- 3 770 697

## Description

L'invention concerne un procédé de fabrication d'un palier de pivotement pour le pivotement d'un composant horloger, notamment de fabrication d'une pierre de pivotement. L'invention concerne aussi un palier de pivotement obtenu par ce procédé, ainsi qu'un ensemble comprenant un tel palier, et un mouvement comprenant un tel palier ou un tel ensemble. L'invention concerne enfin une pièce d'horlogerie, notamment une montre, comprenant un tel mouvement ou un tel ensemble ou un tel palier.

La régularité du pivotement d'un axe, notamment de type axe de balancier au sein d'un amortisseur, est un facteur clé des performances chronométriques d'une montre. En effet, toute variation intervenant au cours du temps, telles qu'une usure du pivot ou sa dégradation sous l'effet de chocs, induit des modifications du comportement de l'oscillateur pouvant provoquer des variations de la marche de la montre.

On connaît plusieurs géométries de pierres percées (également appelées coussinets) telles qu'elles sont disponibles sur le marché, commercialisées par les fournisseurs de pierres. Ces géométries sont notamment désignées par les termes suivants : pierre glace à trou olivé ou à trou cylindrique, pierre d'appui à trou olivé ou à trou cylindrique, pierre demi-glace à trou olivé ou à trou cylindrique, pierre glace à trou olivé ou à trou cylindrique et à deux creusures, pierre bombée à trou olivé ou à trou cylindrique.

Ces pierres peuvent être assemblées au sein de chatons combinés et d'amortisseurs.

Ces pierres comportent un trou, qui peut être olivé ou non, permettant le pivotement du pivot de l'axe à l'encontre d'une surface de pivotement.

Concernant spécifiquement les pierres assemblées au sein de chatons combinés et d'amortisseurs, le trou comporte généralement une creusure sur une première face de la pierre, du côté de l'introduction du pivot, destinée à en faciliter l'insertion. Ces pierres comportent ainsi une première face généralement plate, comportant la creusure, et une face plate ou bombée à l'opposé de la creusure. Dans les pierres selon l'état de l'art, la distinction entre la creusure et la zone ou surface de pivotement se fait aisément, les deux parties étant séparées par une arête généralement franche. Cette arête franche peut s'avérer problématique lors de la phase d'insertion du pivot, qui peut venir buter contre l'arête et se marquer à son contact.

Il est connu d'obtenir des pierres frittées à base de céramique par des techniques de pressage, comme cela est divulgué au sein des documents EP2778801 et EP3483665.

On connaît du document EP2778801 des géométries de palier comportant un évidement sensiblement sphérique formant un premier élément fonctionnel, d'une section dont le diamètre maximal est sensiblement 4.5 fois plus grand que le diamètre minimal du trou, ainsi qu'un évidement sensiblement conique, formant un deuxième élément fonctionnel, d'une section dont le diamètre maximal est sensiblement 2 fois plus grand que le diamètre minimal du trou. L'olivage au niveau du trou vise à minimiser le contact avec un pivot mais également à faciliter une éventuelle lubrification.

On retrouve également au sein du document EP3483665 une géométrie de pierre percée comportant un élément fonctionnel formant un cône d'engagement de la pierre percée. La géométrie de cet élément fonctionnel répond à un besoin de faciliter le montage du pivot à l'aveugle, notamment au sein d'un amortisseur. Néanmoins, une telle pierre frittée est opaque, à la différence d'une pierre en rubis qui présente des propriétés de transparence.

Il apparaît que les procédés existants de fabrication de paliers de pivotement ne sont pas optimisés et/ou ne permettent pas de fabriquer toutes les formes et/ou ne permettent pas de fabriquer tous les matériaux envisageables pour un tel palier.

Le but de l'invention est de fournir une solution permettant d'optimiser la fabrication d'un palier de pivotement, permettant de remédier aux inconvénients de l'art antérieur.

A cet effet, l'invention repose sur un procédé de fabrication d'un palier de pivotement pour le pivotement d'un composant horloger, notamment pierre de pivotement, caractérisé en ce qu'il comprend les étapes suivantes :
- Percer un trou dans une ébauche de palier selon un axe prévu pour le pivotement d'un composant horloger, ce trou formant une amorce d'une première zone de pivotement du palier, puis
- Graver au laser dans l'ébauche, notamment au laser femtoseconde, une deuxième zone de dégagement du palier, juxtaposée à l'amorce d'une première zone de pivotement, cette deuxième zone de dégagement du palier étant débouchante au niveau d'une première face de l'ébauche de palier, puis
- Enlever de la matière par usure, notamment par olivage, au niveau de l'amorce d'une première zone de pivotement du palier et d'une zone frontière entre ladite amorce d'une première zone de pivotement du palier et la deuxième zone de dégagement du palier afin de former une première zone de pivotement et une deuxième zone de dégagement du palier juxtaposées se raccordant l'une à l'autre par un arrondi de raccordement.

L'étape consistant à percer un trou peut comprendre une sous-étape consistant à se munir d'une ébauche agencée entre une première face plane et une deuxième face plane opposée, puis une sous-étape consistant à percer un trou traversant, selon une direction perpendiculaire à la première face.

L'étape consistant à graver au laser une deuxième zone de dégagement du palier peut comprendre plusieurs sous-étapes successives, chaque sous-étape consistant à graver l'ébauche de palier dans au moins un plan distinct des gravages des sous-étapes précédentes.

Lesdits plans distincts des différentes sous-étapes successives peuvent être des plans parallèles entre eux, sensiblement parallèles à la première face de l'ébauche, et peuvent être superposés entre eux, s'étendant entre la première face de l'ébauche et un plan intermédiaire positionné dans l'épaisseur de l'ébauche de palier.

Chaque sous-étape de l'étape consistant à graver au laser peut mettre en oeuvre un gravage circonscrit par un contour circulaire centré sur l'axe dudit trou dans un nouveau plan distinct, de sorte que l'étape consistant à graver au laser génère une deuxième zone de dégagement formée par une gravure de disques superposés dans des plans distincts dont le diamètre est décroissant entre la face supérieure et le plan intermédiaire, le diamètre de gravage dans le plan intermédiaire étant sensiblement égal au diamètre du trou.

La distance entre deux plans successifs desdits plans distincts peut être inférieure ou égale à 2 µm, voire inférieure ou égale à 1 µm.

L'étape consistant à graver au laser une deuxième zone de dégagement du palier peut mettre en oeuvre un gravage d'une surface présentant tout ou partie des caractéristiques suivantes :
- la deuxième zone de dégagement forme un évasement ou un épanouissement continu, dénué d'arête, de la première zone de pivotement du palier jusqu'à la première face du palier ;
- la deuxième zone de dégagement présente une forme sensiblement tronconique sous la forme d'un tronc de cône droit ou selon une surface courbe, notamment comprenant un rayon de courbure tendant vers l'infini au voisinage de la première face ;
- le plus grand diamètre de la deuxième zone de dégagement est supérieur à 4 fois, voire supérieur à 7 fois le plus petit diamètre de la première zone de pivotement;
- la plus grande aire de section de la deuxième zone de dégagement est supérieure à 10 fois ou 25 fois ou 30 fois ou 50 fois la plus petite aire de section de la première zone de pivotement;
- un premier volume limité par la première zone de pivotement et deux plans perpendiculaires à l'axe et passant par les extrémités de la première zone de pivotement relativement à l'axe est inférieur à 0.4 fois ou 0.35 fois ou 0.3 fois ou 0.25 fois le deuxième volume limité par la deuxième zone de dégagement et deux plans perpendiculaires à l'axe et passant par les extrémités de la deuxième zone de dégagement relativement à l'axe et/ou un premier volume limité par la première zone de pivotement et deux plans perpendiculaires à l'axe et passant par les extrémités de la première zone de pivotement relativement à l'axe est supérieur à 0.1 fois ou 0.15 fois ou 0.2 fois le deuxième volume limité par la deuxième zone de dégagement et deux plans perpendiculaires à l'axe et passant par les extrémités de la deuxième zone de dégagement relativement à l'axe;
- les courbes d'intersection des plans passant par l'axe et perpendiculaires à la face avec la deuxième zone de dégagement sont convexes.

L'étape consistant à enlever de la matière par usure peut utiliser un fil diamanté.

L'étape consistant à percer un trou dans une ébauche de palier peut utiliser une broche ou un laser.

L'étape consistant à percer un trou dans une ébauche de palier peut comprendre une sous-étape de grandissage consistant à mettre le trou à un diamètre sensiblement égal au plus petit diamètre de la première zone de pivotement du palier.

Le procédé de fabrication d'un palier peut comprendre une étape de tournage du diamètre extérieur du palier.

Le procédé de fabrication d'un palier peut comprendre une étape de finition, de brossage ou de polissage, notamment pour diminuer la rugosité de la deuxième zone de dégagement du palier.

Le procédé de fabrication d'un palier peut comprendre une étape consistant à arrondir une deuxième face de l'ébauche opposée à la première face de sorte à former une deuxième face bombée du palier et optionnellement à former une troisième zone de dégagement dans le prolongement du trou de l'ébauche au niveau de la deuxième face.

Le procédé de fabrication d'un palier peut comprendre une étape de texturation de tout ou partie de la deuxième zone de dégagement et/ou de tout ou partie de la troisième zone de dégagement, notamment à l'aide d'un laser femtoseconde, de sorte que la première zone de pivotement présente une rugosité différente de celle de la deuxième zone de dégagement et/ou de sorte que la première zone de pivotement présente une surface oléophile et la deuxième zone de dégagement présente, sur sa totalité ou en partie, une surface oléophobe.

L'ébauche peut se présenter en rubis synthétique ou en corindon polycristallin ou en céramique comme une zircone, en particulier une zircone yttriée, ou en une alumine monocristalline, ou en une combinaison alumine-zircone.

L'invention porte aussi sur un palier de pivotement pour le pivotement d'un composant horloger, notamment pierre de pivot, le palier comprenant un trou selon un axe pour le pivotement du composant horloger selon cet axe et qui est doté d'au moins :
- une première zone de pivotement du composant horloger, et
- une deuxième zone de dégagement s'étendant d'une première face du palier à la première zone de pivotement,
la première face étant perpendiculaire ou sensiblement perpendiculaire à l'axe et prévue pour être orientée du côté du composant horloger, la première zone de pivotement et la deuxième zone de dégagement se raccordant l'une à l'autre par un arrondi de raccordement.

Le plus grand diamètre de la deuxième zone de dégagement peut être supérieur à 4 voire 7 fois le plus petit diamètre de la zone de pivotement.

La plus grande aire de section de la deuxième zone de dégagement peut être supérieure à 10 fois ou 25 fois ou 30 fois ou 50 fois la plus petite aire de section de la première zone de pivotement.

Un premier volume limité par la première zone de pivotement et deux plans perpendiculaires à l'axe et passant par les extrémités de la première zone de pivotement relativement à l'axe peut être inférieur à 0.4 fois ou 0.35 fois ou 0.3 fois ou 0.25 fois le deuxième volume limité par la deuxième zone de dégagement et deux plans perpendiculaires à l'axe et passant par les extrémités de la deuxième zone de dégagement relativement à l'axe et/ou un premier volume limité par la première zone de pivotement et deux plans perpendiculaires à l'axe et passant par les extrémités de la première zone de pivotement relativement à l'axe peut être supérieur à 0.1 fois ou 0.15 fois ou 0.2 fois le deuxième volume limité par la deuxième zone de dégagement et deux plans perpendiculaires à l'axe et passant par les extrémités de la deuxième zone de dégagement relativement à l'axe.

La deuxième zone de dégagement peut présenter une forme tronconique ou globalement tronconique.

La deuxième zone de dégagement peut être telle que les courbes d'intersection des plans passant par l'axe avec la deuxième zone de dégagement sont convexes.

La première zone de pivotement peut être olivée.

La première zone de pivotement peut présenter une rugosité différente de celle de la deuxième zone de dégagement et/ou la première zone de pivotement peut présenter une surface oléophile et la deuxième zone de dégagement présente, sur sa totalité ou en partie, une surface oléophobe.

L'invention porte aussi sur un ensemble, notamment chaton ou platine ou pont ou amortisseur, comprenant un palier tel que décrit précédemment.

L'invention porte aussi sur un mouvement horloger comprenant un palier tel que décrit précédemment.

L'invention porte aussi sur une pièce d'horlogerie, notamment montre, en particulier montre bracelet, comprenant un palier tel que décrit précédemment.

L'invention est plus particulièrement définie par les revendications.

Ces objets, caractéristiques et avantages de la présente invention seront exposés en détail dans la description suivante d'un mode de réalisation particulier fait à titre non-limitatif en relation avec les figures jointes parmi lesquelles :
La figure 1 est une vue schématique d'un premier mode de réalisation d'une pièce d'horlogerie incluant un mode de réalisation de palier selon l'invention.
La figure 2 est une vue schématique du premier mode de réalisation de pièce d'horlogerie incluant en outre un composant horloger pivoté dans le palier.
Les figures 3 à 7 représentent les étapes d'un procédé de fabrication d'un palier de pivotement selon un mode de réalisation de l'invention.
La figure 8 représente schématiquement un ordinogramme du procédé de fabrication d'un palier de pivotement selon le mode de réalisation de l'invention.

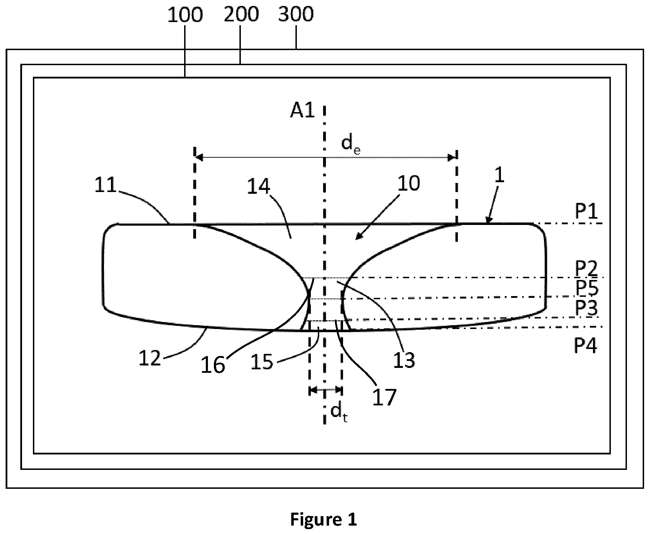

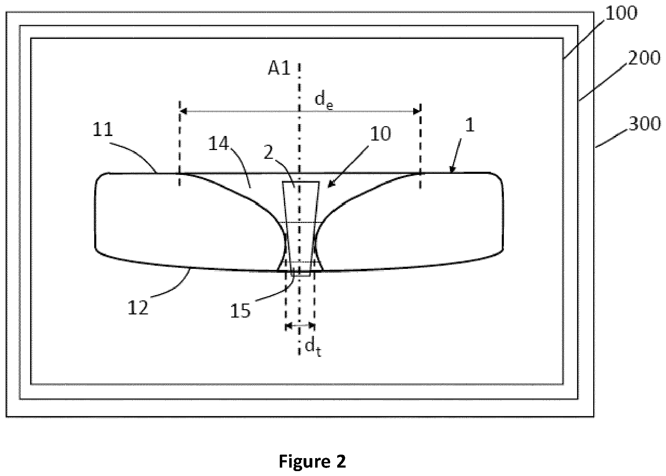

Un mode de réalisation d'une pièce d'horlogerie 300 selon l'invention est décrit ci-après en référence aux figures 1 et 2. La pièce d'horlogerie 300 est par exemple une montre, comme une montre-bracelet.

La pièce d'horlogerie comprend un mouvement horloger 200. Le mouvement horloger 200 est, par exemple, un mouvement mécanique, notamment un mouvement automatique. Alternativement, le mouvement peut être un mouvement électronique.

Le mouvement horloger 200 comprend un ensemble 100 comprenant un palier 1 de pivotement, qui sera dénommé plus simplement palier 1 par la suite. Le palier permet de guider en rotation ou en pivotement un composant horloger 2. Ainsi, le palier permet de recevoir et de guider un pivot du composant horloger selon un axe A1. Le composant comprend de préférence un arbre comprenant lui-même au moins le pivot.

Pour un palier comportant un trou et une creusure ou un cône d'engagement, le trou peut être défini comme la partie de la pierre au contact de laquelle le pivot viendra pivoter en fonctionnement normal. Le diamètre du trou correspond ainsi sensiblement au diamètre du pivot, aux tolérances et jeux près.

Par exemple, le composant horloger est un balancier assemblé d'un oscillateur du type balancier-spiral. Par « balancier assemblé », nous entendons un ensemble constitué d'un balancier et d'un arbre, le balancier étant monté, notamment chassé sur l'arbre.

Par exemple, l'ensemble 100 peut comprendre un amortisseur horloger. Un tel amortisseur peut comprendre un chaton, le palier 1, une pierre de contre-pivot et un ressort. Le palier est alors un palier de type pierre de pivotement ou pierre de pivot. Alternativement, l'ensemble 100 peut comprendre un pont comme une platine ou un pont de balancier sur lequel est chassé un palier 1.

Le palier 1 comprend un trou 10 selon l'axe A1 pour le pivotement du composant horloger 2 selon cet axe A1. L'axe A1 est donc un axe de pivotement du composant horloger 2.

Le palier 1, notamment le trou 10, est doté d'au moins :
- une première zone ou surface de pivotement 13 du composant horloger 2, et
- une deuxième zone ou surface de dégagement 14 s'étendant d'une première face 11 du palier à la première zone de pivotement 13.

La première face 11 est perpendiculaire ou sensiblement perpendiculaire à l'axe A1 et est prévue pour être orientée du côté du composant horloger 2.

La première zone de pivotement 13 et la deuxième zone de dégagement 14 se raccordent l'une à l'autre sans arête ou se raccordent par un arrondi de raccordement.

De préférence, le palier est une pierre. Cette pierre est, de préférence, réalisée en rubis synthétique, à savoir en corindon polycristallin. Alternativement, cette pierre peut être fabriquée en toute autre céramique comme une zircone, en particulier une zircone yttriée, ou une alumine monocristalline, ou une combinaison alumine-zircone.

Le palier comprend de préférence une troisième zone ou surface de dégagement 15 s'étendant d'une deuxième face 12 du palier à la première zone de pivotement 13.

La deuxième face 12 du palier est une face opposée à la première face 11. Les première et deuxième faces sont parallèles ou sensiblement parallèles. Elles sont chacune perpendiculaires ou sensiblement perpendiculaires à l'axe A1. Dans le mode de réalisation représenté, la première face est plane et la deuxième face est bombée (en saillie). La première face peut alternativement être bombée. La deuxième face peut alternativement être plane.

La deuxième zone de dégagement est la zone par laquelle on engage le composant horloger 2, notamment un pivot du composant horloger 2, dans le palier.

La troisième zone de dégagement 15 est la zone, opposée à la deuxième zone de dégagement relativement à la première zone de pivotement et dans laquelle le composant horloger 2, notamment un pivot du composant horloger 2, est susceptible de dépasser une fois mis en place dans le palier.

De préférence, le palier a une forme de révolution d'axe A1. En particulier, le trou a de préférence une forme de révolution d'axe A1. En alternative, seule la première zone de pivotement du trou peut avoir une forme de révolution d'axe A1. En alternative encore, seule la première zone de pivotement et la deuxième zone de dégagement du trou peuvent avoir une forme de révolution d'axe A1 ou seule la première zone de pivotement et la troisième zone de dégagement du trou peuvent avoir une forme de révolution d'axe A1.

Avantageusement, la première zone de pivotement 13 est olivée.

Comme vu précédemment, il n'existe pas de délimitation remarquable visuellement, comme par exemple une arête ou une crête, entre la première zone de pivotement 13 et la deuxième zone de dégagement 14. En effet, les surfaces ou parois de palier définissant ces zones se raccordent l'une à l'autre par un arrondi de raccordement ou se raccordent l'une à l'autre sans former d'arête. En conséquence, la direction d'un plan tangent à la surface du trou évolue sans rupture ou saut de direction lorsqu'on déplace ce plan dans le trou sur la première zone de pivotement et sur la deuxième zone de dégagement. En particulier, la direction d'un plan tangent à la surface du trou évolue sans rupture ou saut de direction lorsqu'on déplace ce plan, dans le trou, de n'importe quel point de la première zone de pivotement à n'importe quel point de la deuxième zone de dégagement. Autrement dit, les courbes d'intersection des plans passant par l'axe A1 et perpendiculaires à la face (11) du palier définissant les parois de la première zone de pivotement et de la deuxième zone de dégagement ne présentent pas de point anguleux à l'interface entre la première zone de pivotement et la deuxième zone de dégagement, voire ne présentent pas de point anguleux sur toute leur étendue. De préférence, le rayon de courbure minimal de la surface ou de la paroi du trou 10 à l'interface de la première zone de pivotement et de la deuxième zone de dégagement ou le rayon de courbure minimal de l'arrondi de raccordement est supérieur à 0.05 mm. De préférence encore, le rayon de courbure minimal de la surface de la première zone de pivotement est supérieur à 0.05 mm.

Une partie de l'arrondi de raccordement fait partie de la première zone de pivotement et une autre partie de l'arrondi de raccordement fait partie de la deuxième zone de dégagement.

De manière arbitraire, on définit, par exemple, la limite entre la première zone de pivotement et la deuxième zone de dégagement comme le lieu où le diamètre du trou (mesuré perpendiculairement à l'axe A1) est égal à 1.1 fois le plus petit diamètre dt (mesuré perpendiculairement à l'axe A1) de la première zone de pivotement ou du trou 10. Alternativement, on définit, par exemple, la limite entre la première zone de pivotement et la deuxième zone de dégagement comme le lieu où l'aire de la section du trou (mesurée perpendiculairement à l'axe A1) est égale à 1.2 fois la plus petite aire de section (mesurée perpendiculairement à l'axe A1) de la première zone de pivotement ou du trou 10. Cette limite est référencée 16 sur la figure 1. Alternativement encore, on définit la limite entre la première zone de pivotement et la deuxième zone de dégagement comme le lieu où le diamètre du trou est équivalent à 140% du diamètre nominal du pivot à mi-hauteur (l'axe comprenant ledit pivot étant au repos). Par le terme « pivot », nous entendons ici une portion de révolution de l'axe prévue exclusivement pour pivoter l'axe dans le palier.

La deuxième zone de dégagement a une géométrie évasée. La deuxième zone de dégagement forme un évasement ou un épanouissement de la première zone de pivotement à la première face 11. De préférence, la deuxième zone de dégagement 14 présente une forme tronconique ou sensiblement tronconique. Préférentiellement, la deuxième zone de dégagement comprend une surface courbée, dont le rayon de courbure tend vers l'infini. Complémentairement, la deuxième zone de dégagement peut également comprendre une forme tronconique ou sensiblement tronconique de section droite. Alternativement, la deuxième zone de dégagement peut se présenter sous une forme tronconique ou sensiblement tronconique de section droite. La géométrie de la deuxième zone de dégagement permet de maximiser la distance palier - composant horloger en dehors de la première zone de pivotement et de faciliter le retour du pivot dans la première zone de pivotement s'il venait à en sortir lors des chocs au porter.

De préférence, les courbes d'intersection des plans passant par l'axe A1 et perpendiculaires à la face 11 du palier définissant la paroi de la deuxième zone de dégagement sont convexes. Par « convexe », on entend que tout segment reliant deux points quelconques de la courbe se trouve dans la matière formant le palier.

De préférence, le plus grand diamètre dₑ de la deuxième zone de dégagement 14 (mesuré perpendiculairement à l'axe A1) est supérieur à 4 fois, voire supérieur à 7 fois le plus petit diamètre dt de la première zone de pivotement 13 ou du trou 10 (mesuré perpendiculairement à l'axe A1).

De préférence encore, la plus grande aire de section de la deuxième zone de dégagement 14 (mesurée perpendiculairement à l'axe A1) est supérieure à 10 fois ou 25 fois ou 30 fois ou 50 fois la plus petite aire de section de la première zone de pivotement 13 ou du trou 10 (mesurée perpendiculairement à l'axe A1).

Avantageusement, un premier volume limité par la première zone de pivotement 13 et deux plans P2, P3 perpendiculaires à l'axe A1 et passant par les extrémités de la première zone de pivotement 13 relativement à l'axe A1 est inférieur à 0.4 fois ou 0.35 fois ou 0.3 fois ou 0.25 fois le deuxième volume limité par la deuxième zone de dégagement 14 et deux plans P1, P2 perpendiculaires à l'axe A1 et passant par les extrémités de la deuxième zone de dégagement relativement à l'axe A1. Avantageusement, le premier volume limité par la première zone de pivotement 13 et deux plans P2, P3 perpendiculaires à l'axe A1 et passant par les extrémités de la première zone de pivotement 13 relativement à l'axe A1 est supérieur à 0.1 fois ou 0.15 fois ou 0.2 fois le deuxième volume limité par la deuxième zone de dégagement 14 et deux plans P1, P2 perpendiculaires à l'axe A1 et passant par les extrémités de la deuxième zone de dégagement relativement à l'axe A1.

Avantageusement encore, le deuxième volume constitue au moins 65%, voire au moins 70%, voire au moins 80%, d'un troisième volume limité par la surface du trou et deux plans P1, P4 perpendiculaires à l'axe A1 et passant par les extrémités du trou relativement à l'axe A1.

Avantageusement, la première zone de pivotement 13 peut présenter une rugosité différente de la deuxième zone de dégagement 14. Plus particulièrement, la première zone de pivotement peut présenter une surface oléophile alors que la deuxième zone de dégagement peut présenter, sur sa totalité ou en partie, une surface oléophobe. Ces rugosités ou structures peuvent être obtenues par un traitement ou une texturation de surface, de préférence par une texturation de surface obtenue par laser femtoseconde. L'obtention de ces rugosités ou textures peut directement intervenir lors de la phase d'usinage des différentes zones, ou ultérieurement par une étape complémentaire de terminaison.

Dans un exemple de réalisation, le diamètre dt vaut 0.076 mm et le diamètre dₑ vaut 0.555 mm. Le lieu comprenant le plus petit diamètre dtde la première zone de pivotement ou du trou 10 peut constituer le milieu de la zone de pivotement 13 ou non. Plus particulièrement, le plan P5 perpendiculaire à l'axe A1 et passant par le lieu comprenant le diamètre dt peut être situé à équidistance des plans P2 et P3 ou non.

L'éventuelle troisième zone de dégagement 15 peut avoir une géométrie évasée. Elle peut former un évasement ou un épanouissement de la première zone de pivotement à la deuxième face 12. De préférence, la troisième zone de dégagement 15 présente une forme tronconique ou sensiblement tronconique.

Il peut ne pas exister de délimitation remarquable visuellement, comme par exemple une arête ou une crête, entre la première zone de pivotement 13 et la troisième zone de dégagement 15. En effet, les surfaces de palier définissant ces zones peuvent avantageusement se raccorder l'une à l'autre par un arrondi de raccordement ou se raccordent l'une à l'autre sans former d'arête. En conséquence, la direction d'un plan tangent à la surface du trou évolue sans rupture ou saut de direction lorsqu'on déplace ce plan dans le trou sur la première zone de pivotement et sur la troisième zone de dégagement. En particulier, la direction d'un plan tangent à la surface du trou évolue sans rupture ou saut de direction lorsqu'on déplace ce plan, dans le trou, de n'importe quel point de la première zone de pivotement à n'importe quel point de la troisième zone de dégagement. Autrement dit, les courbes d'intersection des plans passant par l'axe A1 et perpendiculaires à la face 11 du palier 1 définissant les parois de la première zone de pivotement et de la troisième zone de dégagement ne présentent pas de point anguleux à l'interface entre la première zone de pivotement et la troisième zone de dégagement, voire ne présentent pas de point anguleux sur toute leur étendue. De préférence, le rayon de courbure minimal de la surface du trou 10 à l'interface de la première zone de pivotement et de la troisième zone de dégagement ou le rayon de courbure minimal de l'arrondi de raccordement est supérieur à 0.05 mm.

Une partie de l'arrondi de raccordement fait partie de la première zone de pivotement et une autre partie de l'arrondi de raccordement fait partie de la troisième zone de dégagement.

De manière arbitraire, on définit, par exemple, la limite entre la première zone de pivotement et la troisième zone de dégagement comme le lieu où le diamètre du trou (mesuré perpendiculairement à l'axe A1) est égal à 1.02 fois le plus petit diamètre dt (mesuré perpendiculairement à l'axe A1) de la première zone de pivotement ou du trou 10. Alternativement, on définit, par exemple, la limite entre la première zone de pivotement et la troisième zone de dégagement comme le lieu où l'aire de la section du trou (mesurée perpendiculairement à l'axe A1) est égale à 1.04 fois la plus petite aire de section (mesurée perpendiculairement à l'axe A1) de la première zone de pivotement ou du trou 10. Cette limite est référencée 17 sur la figure 1.

Le palier 1 de pivotement décrit précédemment en référence aux figures 1 et 2 présente une géométrie particulière, en ce qu'il minimise les risques de dégradation d'un pivot lors de son insertion dans le palier, comme cela a été décrit précédemment. Avantageusement, un tel palier peut être fabriqué en rubis synthétique de telle sorte qu'il puisse présenter des propriétés de transparence, facilitant ainsi l'insertion dudit pivot.

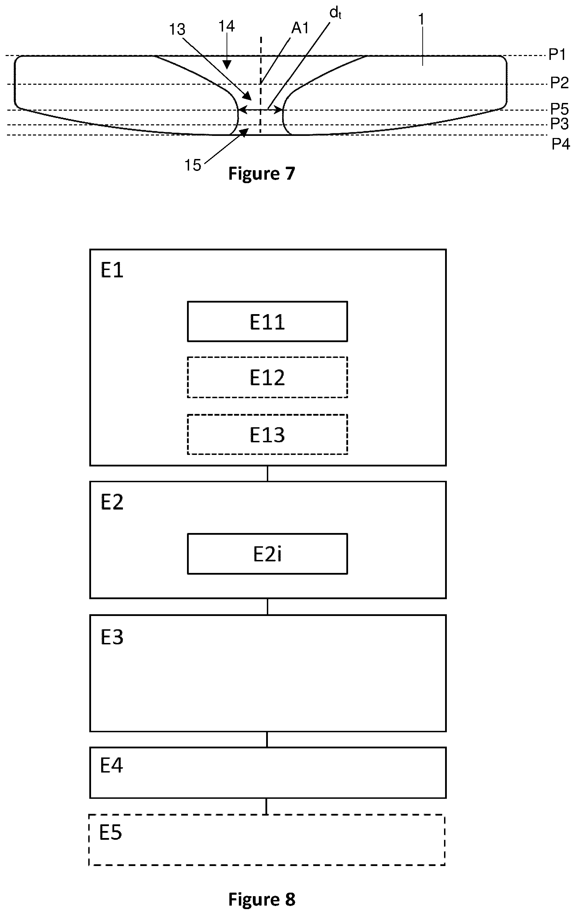

L'invention repose sur un procédé de fabrication d'un palier de pivotement, particulièrement adapté à la fabrication d'un palier tel que décrit précédemment. La figure 8 illustre schématiquement un ordinogramme des étapes d'un tel procédé de fabrication selon un mode de réalisation de l'invention. Naturellement, ce même procédé reste adapté et performant pour fabriquer tout autre palier de pivotement.

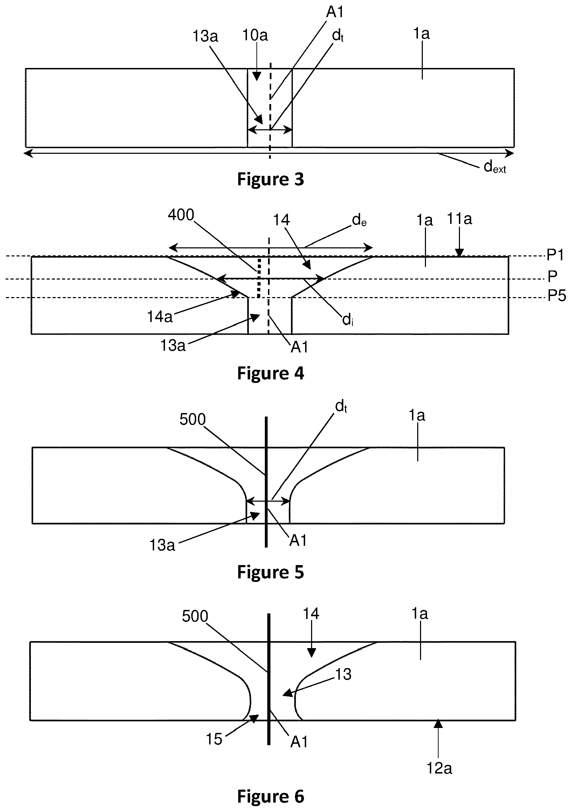

Le procédé comprend une première étape consistant à percer E1 un trou 10a dans une ébauche 1a de palier 1, selon un axe A1 prévu pour le pivotement d'un composant horloger 2. Cette étape est illustrée par la figure 3. Ce trou 10a permet de former une amorce 13a d'une première zone de pivotement 13 telle que décrite précédemment.

Le procédé comprend ainsi avantageusement une sous-étape préalable consistant à se munir d'une ébauche 1a du palier. Cette ébauche 1a peut avantageusement se présenter en rubis synthétique ou en corindon polycristallin. Alternativement, elle peut se présenter en toute autre céramique comme une zircone, en particulier une zircone yttriée, ou en une alumine monocristalline, ou en une combinaison alumine-zircone. De plus, cette ébauche 1a est avantageusement agencée entre une première face 11a plane et une deuxième face 12a plane, opposée et parallèle à la première face 11a. Ces deux faces 11a, 12a de l'ébauche 1a forment des ébauches des faces 11, 12 du futur palier 1. Elles sont respectivement positionnées dans des plans P1, P2. Le procédé comprend ensuite une sous-étape E11 consistant à percer le trou 10a. Ce trou 10a est avantageusement traversant. Il est orienté selon une direction perpendiculaire auxdites deux faces 11a, 12a. Il est centré sur l'axe A1. Il présente avantageusement une forme cylindrique. Le perçage peut être mise en oeuvre mécaniquement par le biais d'une broche ou par le biais d'un faisceau laser, en particulier d'un faisceau laser femtoseconde.

Optionnellement, la première étape comprend une autre sous-étape de grandissage E12 consistant à mettre le trou 10a à un diamètre sensiblement égal au plus petit diamètre dt de la première zone de pivotement 13 du futur palier 1 en cours de fabrication. En variante, ce même diamètre dt peut être obtenu par le biais exclusivement par la première sous-étape susmentionnée.

Optionnellement encore, la première étape comprend une autre sous-étape de tournage E13 du diamètre extérieur dₑₓₜ de l'ébauche 1a du palier 1.

Le procédé comprend ensuite une deuxième étape consistant à graver au laser E2 dans l'ébauche 1a, notamment à l'aide d'un laser femtoseconde, une deuxième zone de dégagement 14 du palier 1, comme illustré par la figure 4. Ce gravage est réalisé au niveau du trou 10a percé à l'étape précédente. La deuxième zone de dégagement 14 à former est juxtaposée à l'amorce 13a de la première zone de pivotement 13. Elle est de plus débouchante au niveau de la première face 11a de l'ébauche 1a de palier 1.

Préférentiellement, le laser utilisé dans cette deuxième étape est un laser femtoseconde. Celui-ci a des impulsions ultra-brèves de manière à ne pas affecter thermiquement la matière usinée, dans des longueurs d'onde adaptées afin de ne pas affecter la structure du matériau de l'ébauche 1a. Le faisceau laser 400 peut être un faisceau laser infrarouge, notamment un faisceau laser infrarouge ayant une longueur d'onde comprise entre 800 nm et 1100 nm, en particulier une longueur d'onde de 1030 nm ± 5 nm, ou un faisceau laser vert, notamment un faisceau laser vert ayant une longueur d'onde comprise entre 500 nm et 540 nm, en particulier une longueur d'onde de 515 nm ± 2.55 nm, ou un faisceau laser ultraviolet, notamment un faisceau laser ultraviolet ayant une longueur d'onde inférieure à 400 nm, en particulier une longueur d'onde de 343 nm ± 25 nm, ou un faisceau laser bleu, notamment un faisceau laser bleu ayant une longueur d'onde comprise entre 400 nm et 480 nm. De plus, le faisceau laser peut avoir une énergie comprise entre 0.001 mJ et 2 mJ, voire comprise entre 0.004 mJ et 0.1 mJ, voire même comprise entre 0.004 et 0.05 mJ. Le faisceau laser peut avoir un diamètre compris entre 5 µm et 100 µm, de préférence compris entre 10 µm et 60 µm, voire entre 15 µm et 30 µm.

Selon le mode de réalisation, l'étape consistant à graver au laser E2 une deuxième zone de dégagement 14 du palier 1 comprend plusieurs sous-étapes successives consistant à graver l'ébauche 1a de palier 1 dans plusieurs plans P distincts. Autrement dit, chaque sous-étape peut mettre en oeuvre un gravage dans un nouveau plan distinct des plans précédemment gravés. Dans cette sous-étape, ces plans précédemment gravés peuvent optionnellement subir aussi des gravages supplémentaires, ce qui n'exclut donc pas le gravage dans plusieurs plans dans une même sous-étape. Lesdits plans P distincts sont avantageusement des plans parallèles entre eux. De préférence, la distance entre deux plans successifs desdits plans P distincts est inférieure ou égale à 2 µm, voire inférieure ou égale à 1 µm. Ils sont aussi avantageusement sensiblement parallèles à la première face 11a de l'ébauche 1a, et sont superposés entre eux, s'étendant entre la première face 11a de l'ébauche, dans un premier plan P1, et un plan intermédiaire P5 positionné dans l'épaisseur de l'ébauche 1a de palier 1. Avantageusement, cette étape de gravage au laser est donc aussi réalisée dans l'amorce 13a au niveau de la future première zone de pivotement 13, entre le plan intermédiaire P5 et le plan P2 mentionné précédemment qui forme la frontière entre la première zone de pivotement 13 et la deuxième zone de dégagement 14. Elle forme ainsi une portion 14a qui se trouve au niveau de la zone frontière entre la première zone de pivotement 13 et la deuxième zone de dégagement 14. Elle forme aussi naturellement la deuxième zone de dégagement 14 en tant que telle, entre les deux plans P1, P2.

Chaque sous-étape de la deuxième étape consistant à graver au laser E2 met avantageusement en oeuvre un gravage inscrit dans un contour circulaire centré sur l'axe A1 du trou 10a, dont le diamètre peut être décroissant entre la face supérieure 11a (ou le plan P1) et le plan intermédiaire P5, le diamètre de gravage dans le plan intermédiaire P5 pouvant être sensiblement égal au diamètre du trou 10a.

Plus précisément, la deuxième étape consistant à graver au laser E2 peut comprendre n sous-étapes E2i (avec 1 ≤ i ≤ n) de passage d'un faisceau laser 400 selon n plans P parallèles ou sensiblement parallèles aux plans P1 et P5 et disposés entre les plans P1 et P5. Plus particulièrement, le faisceau laser passe par n surfaces respectivement circonscrites par un cercle de diamètre dᵢ et centré sur l'axe A1 au niveau de chacun des plans P disposés entre les plans P1 et P5. Ces sous-étapes peuvent être précisées de la manière suivante :
- une première sous-étape E21 peut consister au passage du faisceau laser 400 sensiblement au niveau du plan P1. Plus particulièrement, cette première sous-étape E21 peut consister à faire passer le faisceau laser 400 selon une trajectoire prédéfinie sur une surface circonscrite par un cercle d'axe A1 et de diamètre dᵢ = dₑ ;
- cette première sous-étape E21 est suivie de n-2 sous-étapes au sein desquelles le faisceau laser va se déplacer selon une trajectoire prédéfinie au sein de n-2 surfaces, avec 1<i ≤n, disposées respectivement au niveau de n-2 plans P en s'éloignant progressivement du plan P1 selon un déplacement parallèle ou sensiblement parallèle à l'axe A1 jusqu'à atteindre le plan P5. Dans chaque plan P, la sous-étape E2i peut consister à faire passer le faisceau laser 400 selon une trajectoire prédéfinie sur une surface circonscrite par un cercle d'axe A1 et de diamètre dᵢ, avec dt ≤ dᵢ ≤ dₑ ;
- dans la sous-étape finale E2n, le faisceau laser 400 se déplace selon une trajectoire prédéfinie au niveau du plan P5. Plus particulièrement, cette dernière sous-étape E2n peut consister à faire passer le faisceau laser 400 selon une trajectoire prédéfinie sur une surface circonscrite par un cercle d'axe A1 et de diamètre dₙ = dt.

En remarque, le gravage dans chaque plan présente une faible épaisseur, c'est pourquoi nous pouvons le considérer comme un gravage de surface, cette épaisseur étant toutefois suffisante pour former un volume gravé, en superposant tous les gravages sur les différentes surfaces susmentionnées.

Dans le mode de réalisation susmentionné, chaque sous-étape de la deuxième étape consistant à graver au laser E2 met avantageusement en oeuvre un gravage inscrit dans un contour circulaire centré sur l'axe A1 du trou 10a, dont le diamètre est décroissant entre la face supérieure 11a (ou le plan P1) et le plan intermédiaire P5, le diamètre de gravage dans le plan P1 pouvant être égal au diamètre dₑ et le diamètre de gravage dans le plan intermédiaire P5 pouvant être sensiblement égal au diamètre dt. Alternativement, chaque sous-étape de la deuxième étape consistant à graver au laser E2 met avantageusement en oeuvre un gravage inscrit dans un contour circulaire centré sur l'axe A1 du trou 10a dans un nouveau plan P. Une telle sous-étape peut simultanément procéder à des gravages complémentaires des plans précédemment gravés. Ainsi, à chaque sous-étape, un plan précédemment gravé peut être gravé de nouveau selon une surface inscrite dans un contour circulaire centré sur l'axe A1 et de rayon augmenté. Le diamètre de gravage dans chaque plan P déjà gravé est ainsi croissant à chaque sous-étape. A titre d'exemple, le gravage dans le plan P1 peut être croissant à chaque sous étape, variant finalement d'une valeur dt lors de la première sous-étape à la valeur dₑ lors de la dernière sous-étape.

Alternativement encore, chaque sous-étape de la deuxième étape consistant à graver au laser E2 met avantageusement en oeuvre un gravage inscrit dans un contour circulaire centré sur l'axe A1 du trou 10a, dont le diamètre peut varier de manière aléatoire entre les valeurs dt et dₑ. Dans ce cas de figure, le laser peut graver plusieurs plans P durant une sous-étape, comme explicité précédemment.

Comme mentionné précédemment, la distance entre chacun des plans P est adaptée pour obtenir une surface finale la plus continue qui soit au niveau de la paroi de la deuxième zone de dégagement 14.

Finalement, l'étape consistant à graver au laser E2 la deuxième zone de dégagement 14 du palier 1 met en oeuvre un gravage d'une surface présentant tout ou partie des caractéristiques suivantes :
- la deuxième zone de dégagement 14 forme un évasement ou un épanouissement continu dénué d'arête de la première zone de pivotement 13 du palier 1 (ou de l'amorce 13a de cette première zone de pivotement 13) jusqu'à la première face 11a du palier 1 ;
- la deuxième zone de dégagement 14 présente une forme sensiblement tronconique sous la forme d'un tronc de cône droit ou selon une surface courbe, notamment comprenant un rayon de courbure tendant vers l'infini au voisinage de la première face 11a ;
- le plus grand diamètre dₑ de la deuxième zone de dégagement 14 est supérieur à 4 fois, voire supérieur à 7 fois le plus petit diamètre dt de la première zone de pivotement 13 ;
- la plus grande aire de section de la deuxième zone de dégagement 14 est supérieure à 10 fois ou 25 fois ou 30 fois ou 50 fois la plus petite aire de section de la première zone de pivotement 13 ;
- un premier volume limité par la première zone de pivotement 13 (entre les deux plans (P2, P3) perpendiculaires à l'axe A1) est inférieur à 0.4 fois ou 0.35 fois ou 0.3 fois ou 0.25 fois le deuxième volume limité par la deuxième zone de dégagement 14 (entre les deux plans (P1, P2) perpendiculaires à l'axe A1) et/ou un premier volume limité par la première zone de pivotement 13 (entre les deux plans (P2, P3) perpendiculaires à l'axe A1) est supérieur à 0.1 fois ou 0.15 fois ou 0.2 fois le deuxième volume limité par la deuxième zone de dégagement 14 (entre les deux plans (P1, P2) perpendiculaires à l'axe A1) ;
- les courbes d'intersection des plans passant par l'axe A1 et perpendiculaires à la face 11a ou 11 avec la deuxième zone de dégagement 14 sont convexes.

Le procédé comprend ensuite une troisième étape consistant à enlever de la matière par usure E3, au niveau de l'amorce 13a de la première zone de pivotement 13 du palier 1 et d'une zone frontière 14a entre ladite amorce 13a d'une première zone de pivotement 13 du palier 1 et la deuxième zone de dégagement 14 du palier 1, afin de former la première zone de pivotement 13 et la deuxième zone de dégagement 14 du palier 1 de manière juxtaposées, se raccordant l'une à l'autre par un arrondi de raccordement. Cette troisième étape d'enlèvement de matière par usure E3 peut être une étape d'olivage, comme représentée par les figures 5 et 6.

Plus précisément, la troisième étape peut consister à faire passer un fil diamanté 500 au sein du trou 10a et à faire déplacer l'ébauche 1a de palier relativement à ce fil, de sorte à modifier le caractère cylindrique de l'amorce 13a en lui donnant sa forme définitive de première zone de pivotement 13. Cette forme est parfois dénommée forme « d'olive ». Une fois la deuxième étape terminée, la première zone de pivotement 13 est dénuée d'arête. Le diamètre minimal dt est mesuré en considérant un cercle dans un plan intermédiaire P5, de diamètre tangent aux parois les plus rapprochées de la première zone de pivotement 13.

En complément, le fil diamanté 500 agit également sur au moins une portion frontière 14a de la deuxième zone de dégagement 14 jouxtant l'amorce 13a ou la première zone de pivotement 13. Ainsi, les première et deuxième zones 13, 14 se raccordent l'une à l'autre sans arête et/ou se raccordent entre elles par un arrondi de raccordement. Ces première et deuxième zones 13, 14 forment ainsi une surface ou une paroi continue grâce à la synergie de deux techniques, la première étant le gravage laser et la deuxième étant l'enlèvement de matière par usure.

Le fil diamanté 500 agit également sur la jonction du trou 10a et de la deuxième face 12a de l'ébauche 1a. Cette zone de transition entre la deuxième face 12a et la première zone de pivotement 13 forme la troisième zone de dégagement 15 décrite précédemment. Les première et troisième zones 13, 15 se raccordent ainsi l'une à l'autre sans arête et/ou se raccordent entre elles par un arrondi de raccordement grâce à cette troisième étape. La troisième zone de dégagement 15 est agencée dans le prolongement du trou 10a de l'ébauche 1a, et débouche au niveau de la deuxième face 12a de l'ébauche 1a de palier 1.

Le procédé peut ensuite optionnellement comprendre une quatrième étape de finition E4, de brossage ou de polissage, de sorte à obtenir le palier 1 finalisé. Une telle étape peut consister à brosser l'ébauche 1a de palier 1 à l'aide de pâte de diamant. Cette étape peut comprendre différentes sous étapes visant à minimiser la rugosité de l'ébauche 1a de palier, notamment sur les parois de la deuxième zone de dégagement 14 et sur ses faces 11a, 12a. Une sous-étape peut en particulier être prévue pour conférer à la deuxième face 12 du palier 1 un aspect bombé. La figure 7 illustre le palier 1 de pivotement finalement obtenu, après mise en oeuvre de cette quatrième étape de finition E4 et notamment de cette sous-étape susmentionnée. En remarque, ce palier 1 comprend alors un trou 10 délimité par les surfaces des différentes zones 13, 14, 15 formées par le procédé de l'invention, à partir du trou 10a initial de l'ébauche, qui forme donc lui-même une ébauche du futur trou 10.

Dans un mode de réalisation alternatif du procédé, la quatrième étape de finition E4 peut être intercalée entre la deuxième étape E2 et la troisième étape E3, le plus important étant que la troisième étape E3 soit effectuée en aval de la deuxième étape E2.

Une étape optionnelle de texturation E5 de tout ou partie de la zone de dégagement 14 et/ou de tout ou partie de la zone de dégagement 15 peut également être prévue. Cette étape est préférentiellement réalisée à l'aide d'un laser femtoseconde. Cette étape peut être effectuée en amont ou en aval de l'étape de finition E4.

Naturellement, le procédé décrit précédemment est particulièrement adapté pour former une pierre de pivotement telle que représentée par les figures 1 et 2, mais reste de même adapté pour la fabrication de tout autre palier horloger.

## Revendications

1. Procédé de fabrication d'un palier (1) de pivotement pour le pivotement d'un composant horloger (2), notamment pierre de pivotement, **caractérisé en ce qu'**il comprend les étapes suivantes :
- Percer (E1) un trou (10a) dans une ébauche (1a) de palier (1) selon un axe (A1) prévu pour le pivotement d'un composant horloger (2), ce trou (10a) formant une amorce (13a) d'une première zone de pivotement (13) du palier (1), puis
- Graver au laser (E2) dans l'ébauche (1a), notamment au laser femtoseconde, une deuxième zone de dégagement (14) du palier (1), juxtaposée à l'amorce (13a) d'une première zone de pivotement (13), cette deuxième zone de dégagement (14) du palier (1) étant débouchante au niveau d'une première face (11a) de l'ébauche (1a) de palier (1), puis
- Enlever de la matière par usure (E3), notamment par olivage, au niveau de l'amorce (13a) d'une première zone de pivotement (13) du palier (1) et d'une zone frontière (14a) entre ladite amorce (13a) d'une première zone de pivotement (13) du palier (1) et la deuxième zone de dégagement (14) du palier (1) afin de former une première zone de pivotement (13) et une deuxième zone de dégagement (14) du palier (1) juxtaposées se raccordant l'une à l'autre par un arrondi de raccordement.

2. Procédé de fabrication d'un palier (1) de pivotement selon la revendication précédente, **caractérisé en ce que** l'étape consistant à percer (E1) un trou (10a) comprend une sous-étape consistant à se munir d'une ébauche (1a) agencée entre une première face (11a) plane et une deuxième face (12a) plane opposée, puis une sous-étape consistant à percer un trou (10a) traversant, selon une direction perpendiculaire à la première face (11a).

3. Procédé de fabrication d'un palier (1) de pivotement selon l'une des revendications précédentes, **caractérisé en ce que** l'étape consistant à graver au laser (E2) une deuxième zone de dégagement (14) du palier (1) comprend plusieurs sous-étapes successives, chaque sous-étape consistant à graver l'ébauche (1a) de palier (1) dans au moins un plan distinct des gravages des sous-étapes précédentes.

4. Procédé de fabrication d'un palier (1) de pivotement selon la revendication précédente, **caractérisé en ce que** lesdits plans distincts des différentes sous-étapes successives sont des plans parallèles entre eux, sensiblement parallèles à la première face (11a) de l'ébauche (1a), et sont superposés entre eux, s'étendant entre la première face (11a) de l'ébauche et un plan intermédiaire (P5) positionné dans l'épaisseur de l'ébauche (1a) de palier (1).

5. Procédé de fabrication d'un palier (1) de pivotement selon la revendication précédente, **caractérisé en ce que** chaque sous-étape de l'étape consistant à graver au laser (E2) met en oeuvre un gravage circonscrit par un contour circulaire centré sur l'axe (A1) dudit trou (10a) dans un nouveau plan distinct, de sorte que l'étape consistant à graver (E2) au laser génère une deuxième zone de dégagement (14) formée par une gravure de disques superposés dans des plans distincts dont le diamètre est décroissant entre la face supérieure (11a) et le plan intermédiaire (P5), le diamètre de gravage dans le plan intermédiaire (P5) étant sensiblement égal au diamètre du trou (10a).

6. Procédé de fabrication d'un palier (1) de pivotement selon l'une des revendications 3 à 5, **caractérisé en ce que** la distance entre deux plans successifs desdits plans distincts est inférieure ou égale à 2 µm, voire inférieure ou égale à 1 µm.

7. Procédé de fabrication d'un palier (1) de pivotement selon l'une des revendications précédentes, **caractérisé en ce que** l'étape consistant à graver au laser (E2) une deuxième zone de dégagement (14) du palier (1) met en oeuvre un gravage d'une surface présentant tout ou partie des caractéristiques suivantes :
- la deuxième zone de dégagement (14) forme un évasement ou un épanouissement continu, dénué d'arête, de la première zone de pivotement (13) du palier (1) jusqu'à la première face (11) du palier (1) ;
- la deuxième zone de dégagement (14) présente une forme sensiblement tronconique sous la forme d'un tronc de cône droit ou selon une surface courbe, notamment comprenant un rayon de courbure tendant vers l'infini au voisinage de la première face (11) ;
- le plus grand diamètre (dₑ) de la deuxième zone de dégagement (14) est supérieur à 4 fois, voire supérieur à 7 fois, le plus petit diamètre (dt) de la première zone de pivotement (13) ;
- la plus grande aire de section de la deuxième zone de dégagement (14) est supérieure à 10 fois ou 25 fois ou 30 fois ou 50 fois la plus petite aire de section de la première zone de pivotement (13) ;
- un premier volume limité par la première zone de pivotement (13) et deux plans (P2, P3) perpendiculaires à l'axe (A1)) est inférieur à 0.4 fois ou 0.35 fois ou 0.3 fois ou 0.25 fois le deuxième volume limité par la deuxième zone de dégagement (14) et deux plans (P1, P2) perpendiculaires à l'axe (A1) et/ou un premier volume limité par la première zone de pivotement (13) et deux plans (P2, P3) perpendiculaires à l'axe (A1) est supérieur à 0.1 fois ou 0.15 fois ou 0.2 fois le deuxième volume limité par la deuxième zone de dégagement (14) et deux plans (P1, P2) perpendiculaires à l'axe (A1) ;
- les courbes d'intersection des plans passant par l'axe (A1) et perpendiculaires à la face (11) avec la deuxième zone de dégagement (14) sont convexes.

8. Procédé de fabrication d'un palier (1) de pivotement selon l'une des revendications précédentes, **caractérisé en ce que** l'étape consistant à enlever de la matière par usure (E3) utilise un fil diamanté.

9. Procédé de fabrication d'un palier (1) de pivotement selon l'une des revendications précédentes, **caractérisé en ce que** l'étape consistant à percer (E1) un trou (10a) dans une ébauche (1a) de palier (1) utilise une broche ou un laser.

10. Procédé de fabrication d'un palier (1) de pivotement selon l'une des revendications précédentes, **caractérisé en ce que** l'étape consistant à percer (E1) un trou (10a) dans une ébauche (1a) de palier (1) comprend une sous-étape de grandissage (E12) consistant à mettre le trou (10a) à un diamètre sensiblement égal au plus petit diamètre (dt) de la première zone de pivotement (13) du palier (1).

11. Procédé de fabrication d'un palier (1) de pivotement selon l'une des revendications précédentes, **caractérisé en ce qu'**il comprend une étape de tournage (E13) du diamètre extérieur (dₑₓₜ) du palier (1).

12. Procédé de fabrication d'un palier (1) de pivotement selon l'une des revendications précédentes, **caractérisé en ce qu'**il comprend une étape de finition (E4) de brossage ou de polissage, notamment pour diminuer la rugosité de la deuxième zone de dégagement (14) du palier (1).

13. Procédé de fabrication d'un palier (1) de pivotement selon l'une des revendications précédentes, **caractérisé en ce qu'**il comprend une étape consistant à arrondir une deuxième face (12a) de l'ébauche (1a) opposée à la première face (11a) de sorte à former une deuxième face (12) bombée du palier (1) et optionnellement à former une troisième zone de dégagement (15) dans le prolongement du trou (10a) de l'ébauche (1a) au niveau de la deuxième face (12).

14. Procédé de fabrication d'un palier (1) de pivotement selon l'une des revendications précédentes, **caractérisé en ce qu'**il comprend une étape de texturation (E5) de tout ou partie de la deuxième zone de dégagement (14) et/ou de tout ou partie de la troisième zone de dégagement (15), notamment à l'aide d'un laser femtoseconde, de sorte que la première zone de pivotement (13) présente une rugosité différente de celle de la deuxième zone de dégagement (14) et/ou de sorte que la première zone de pivotement (13) présente une surface oléophile et la deuxième zone de dégagement (14) présente, sur sa totalité ou en partie, une surface oléophobe.

15. Procédé de fabrication d'un palier (1) de pivotement selon l'une des revendications précédentes, **caractérisé en ce que** l'ébauche (1a) se présente en rubis synthétique ou en corindon polycristallin ou en céramique comme une zircone, en particulier une zircone yttriée, ou en une alumine monocristalline, ou en une combinaison alumine-zircone.

## Patentansprüche

1. Verfahren zur Herstellung eines Schwenklagers (1) zum Schwenken einer Uhrkomponente (2), insbesondere eines Lagersteins, **dadurch gekennzeichnet, dass** es die folgenden Schritte umfasst:
- Bohren (E1) eines Lochs (10a) in einen Rohling (1a) eines Lagers (1) entlang einer Achse (A1), die zum Schwenken einer Uhrkomponente (2) vorgesehen ist, wobei das Loch (10a) einen Anfang (13a) eines ersten Schwenkbereichs (13) des Lagers (1) bildet, anschließend
- Eingravieren (E2) eines zweiten Freigabebereichs (14) des Lagers (1), der neben dem Anfang (13a) eines ersten Schwenkbereichs (13) liegt, in den Rohling (1a) mit einem Laser, insbesondere mit einem Femtosekundenlaser, wobei der zweite Freigabebereich (14) des Lagers (1) auf Höhe einer ersten Fläche (11a) des Rohlings (1a) des Lagers (1) mündet, anschließend
- Entfernen (E3) von Material auf Höhe des Anfangs (13a) eines ersten Schwenkbereichs (13) des Lagers (1) und eines Grenzbereichs (14a) zwischen dem Anfang (13a) eines ersten Schwenkbereichs (13) des Lagers (1) und dem zweiten Freigabebereich (14) des Lagers (1) durch Abreiben, insbesondere durch Olivieren, um einen ersten Schwenkbereich (13) und einen zweiten Freigabebereich (14) des Lagers (1) zu bilden, die nebeneinander liegen und durch eine Verbindungsabrundung miteinander verbunden sind.

2. Verfahren zur Herstellung eines Schwenklagers (1) nach dem vorangehenden Anspruch, **dadurch gekennzeichnet, dass** der Schritt (E1) des Bohrens eines Lochs (10a) einen Unterschritt des Bereitstellens eines Rohlings (1a), der zwischen einer ersten ebenen Fläche (11a) und einer gegenüberliegenden zweiten ebenen Fläche (12a) angeordnet ist, und anschließend einen Unterschritt des Bohrens eines Durchgangslochs (10a) in einer zur ersten Fläche (11a) senkrechten Richtung umfasst.

3. Verfahren zur Herstellung eines Schwenklagers (1) nach einem der vorangehenden Ansprüche, **dadurch gekennzeichnet, dass** der Schritt (E2) des Lasergravierens eines zweiten Freigabebereichs (14) des Lagers (1) mehrere aufeinanderfolgende Unterschritte umfasst, wobei jeder Unterschritt darin besteht, den Rohling (1a) des Lagers (1) in mindestens einer Ebene zu gravieren, die sich von den Gravuren der vorangegangenen Unterschritte unterscheidet.

4. Verfahren zur Herstellung eines Schwenklagers (1) nach dem vorangehenden Anspruch, **dadurch gekennzeichnet, dass** die separaten Ebenen der verschiedenen aufeinanderfolgenden Unterschritte zueinander parallele Ebenen sind, die zur ersten Fläche (11a) des Rohlings (1a) im Wesentlichen parallel sind und die übereinanderliegen, wobei sie sich zwischen der ersten Fläche (11a) des Rohlings und einer in der Dicke des Rohlings (1a) des Lagers (1) positionierten Zwischenebene (P5) erstrecken.

5. Verfahren zur Herstellung eines Schwenklagers (1) nach dem vorangehenden Anspruch, **dadurch gekennzeichnet, dass** jeder Unterschritt des Schritts (E2) des Lasergravierens eine Gravur implementiert, die durch eine kreisförmige Kontur umschrieben wird, die auf der Achse (A1) des Lochs (10a) in einer neuen separaten Ebene zentriert ist, so dass der Schritt (E2) des Lasergravierens einen zweiten Freigabebereich (14) erzeugt, der durch eine Gravur übereinanderliegender Scheiben in separaten Ebenen gebildet wird, deren Durchmesser zwischen der oberen Fläche (11a) und der Zwischenebene (P5) abnimmt, wobei der Durchmesser der Gravur in der Zwischenebene (P5) im Wesentlichen gleich dem Durchmesser des Lochs (10a) ist.

6. Verfahren zur Herstellung eines Schwenklagers (1) nach einem der Ansprüche 3 bis 5, **dadurch gekennzeichnet, dass** der Abstand zwischen zwei aufeinanderfolgenden Ebenen der separaten Ebenen 2 um oder weniger oder sogar 1 µm oder weniger beträgt.

7. Verfahren zur Herstellung eines Schwenklagers (1) nach einem der vorangehenden Ansprüche, **dadurch gekennzeichnet, dass** der Schritt (E2) des Lasergravierens eines zweiten Freigabebereichs (14) des Lagers (1) eine Gravur einer Oberfläche mit allen oder einigen der folgenden Merkmale implementiert:
- der zweite Freigabebereich (14) bildet eine durchgehende, kantenlose Aufweitung oder Verbreiterung des ersten Schwenkbereichs (13) des Lagers (1) bis zur ersten Fläche (11) des Lagers (1);
- der zweite Freigabebereich (14) weist eine im Wesentlichen kegelstumpfförmige Form in Form eines geraden Kegelstumpfs oder entlang einer gekrümmten Fläche auf, die insbesondere einen Krümmungsradius umfasst, der in der Nähe der ersten Fläche (11) gegen Unendlich strebt;
- der größte Durchmesser (dₑ) des zweiten Freigabebereichs (14) ist größer als das 4-fache oder sogar größer als das 7-fache des kleinsten Durchmessers (dₜ) des ersten Schwenkbereichs (13);
- die größte Querschnittsfläche des zweiten Freigabebereichs (14) ist größer als das 10-fache oder 25-fache oder 30-fache oder 50-fache der kleinsten Querschnittsfläche des ersten Schwenkbereichs (13);
- ein erstes Volumen, das durch den ersten Schwenkbereich (13) und zwei zur Achse (A1) senkrechte Ebenen (P2, P3) begrenzt ist, ist kleiner als das 0,4-fache oder 0,35-fache oder 0,3-fache oder 0,25-fache des zweiten Volumens, das durch den zweiten Freigabebereich (14) und zwei zur Achse (A1) senkrechte Ebenen (P1, P2) begrenzt ist, und/oder ein erstes Volumen, das durch den ersten Schwenkbereich (13) und zwei zur Achse (A1) senkrechte Ebenen (P2, P3) begrenzt ist, ist größer als das 0,1-fache oder 0,15-fache oder 0,2-fache des zweiten Volumens, das durch den zweiten Freigabebereich (14) und zwei zur Achse (A1) senkrechte Ebenen (P1, P2) begrenzt ist;
- die Schnittkurven der Ebenen, die durch die Achse (A1) und senkrecht zur Fläche (11) verlaufen, mit dem zweiten Freigabebereich (14) sind konvex.

8. Verfahren zur Herstellung eines Schwenklagers (1) nach einem der vorangehenden Ansprüche, **dadurch gekennzeichnet, dass** bei dem Schritt (E3) des Abtragens von Material durch Abreiben ein Diamantdraht verwendet wird.

9. Verfahren zur Herstellung eines Schwenklagers (1) nach einem der vorangehenden Ansprüche, **dadurch gekennzeichnet, dass** bei dem Schritt (E1) des Bohrens eines Lochs (10a) in einen Rohling (1a) des Lagers (1) eine Spindel oder ein Laser verwendet wird.

10. Verfahren zur Herstellung eines Schwenklagers (1) nach einem der vorangehenden Ansprüche, **dadurch gekennzeichnet, dass** der Schritt (E1) des Bohrens eines Lochs (10a) in einen Rohling (1a) des Lagers (1) einen Unterschritt (E12) des Vergrößerns umfasst, der darin besteht, das Loch (10a) auf einen Durchmesser zu bringen, der im Wesentlichen gleich dem kleinsten Durchmesser (dₜ) des ersten Schwenkbereichs (13) des Lagers (1) ist.

11. Verfahren zur Herstellung eines Schwenklagers (1) nach einem der vorangehenden Ansprüche, **dadurch gekennzeichnet, dass** es einen Schritt (E13) des Drehens des Außendurchmesser (dₑₓₜ) des Lagers (1) umfasst.

12. Verfahren zur Herstellung eines Schwenklagers (1) nach einem der vorangehenden Ansprüche, **dadurch gekennzeichnet, dass** es einen Endbearbeitungsschritt (E4) des Bürstens oder Polierens umfasst, insbesondere um die Rauheit des zweiten Freigabebereichs (14) des Lagers (1) zu verringern.

13. Verfahren zur Herstellung eines Schwenklagers (1) nach einem der vorangehenden Ansprüche, **dadurch gekennzeichnet, dass** es einen Schritt des Abrundens einer der ersten Fläche (11a) des Rohlings (1a) gegenüberliegenden zweiten Fläche (12a) umfasst, um eine gewölbte zweite Fläche (12) des Lagers (1) zu bilden, und optional einen dritten Freigabebereich (15) in der Verlängerung des Lochs (10a) des Rohlings (1a) auf Höhe der zweiten Fläche (12) zu bilden.

14. Verfahren zur Herstellung eines Schwenklagers (1) nach einem der vorangehenden Ansprüche, **dadurch gekennzeichnet, dass** es einen Schritt (E5) des Texturierens des gesamten zweiten Freigabebereichs (14) oder eines Teils davon und/oder des gesamten dritten Freigabebereichs (15) oder eines Teils davon umfasst, insbesondere mit Hilfe eines Femtosekundenlasers, so dass der erste Schwenkbereich (13) ein Rauheit aufweist, die sich von der des zweiten Freigabebereichs (14) unterscheidet, und/oder so dass der erste Schwenkbereich (13) eine oleophile Oberfläche aufweist und der zweite Freigabebereich (14) ganz oder teilweise eine oleophobe Oberfläche aufweist.

15. Verfahren zur Herstellung eines Schwenklagers (1) nach einem der vorangehenden Ansprüche, **dadurch gekennzeichnet, dass** der Rohling (1a) aus synthetischem Rubin oder aus polykristallinem Korund oder aus Keramik, wie etwa Zirkonoxid, insbesondere yttriiertem Zirkonoxid, oder aus monokristallinem Aluminiumoxid oder aus einer Aluminiumoxid-Zirkoniumoxid-Kombination vorliegt.

## Claims

1. A method for manufacturing a pivot bearing (1) for the pivoting of a timepiece component (2), in particular a pivot jewel, wherein it comprises the following steps:
- boring (E1) a hole (10a) in a bearing (1) blank (1a) along an axis (A1) intended for the pivoting of a timepiece component (2), this hole (10a) forming a start point (13a) of a first pivot zone (13) of the bearing (1), then
- laser engraving (E2), in the blank (1a), in particular using a femtosecond laser, a second clearance zone (14) of the bearing (1), juxtaposed with the start point (13a) of a first pivot zone (13), this second clearance zone (14) of the bearing (1) opening at a first face (11a) of the bearing (1) blank (1a), then
- removing material by means of wear (E3), in particular by olive-cutting, at the start point (13a) of a first pivot zone (13) of the bearing (1) and a boundary zone (14a) between the start point (13a) of a first pivot zone (13) of the bearing (1) and the second clearance zone (14) of the bearing (1) in order to form a first pivot zone (13) and a second clearance zone (14) of the bearing (1) that are juxtaposed, being connected to each other by a rounded connection.

2. The method as claimed in the preceding claim for manufacturing a pivot bearing (1), wherein the step consisting in boring (E1) a hole (10a) comprises a sub-step consisting in obtaining a blank (1a) arranged between a first plane face (11a) and an opposite second plane face (12a), then a sub-step consisting in boring a through-hole (10a) in a direction perpendicular to the first face (11a).

3. The method as claimed in either one of the preceding claims for manufacturing a pivot bearing (1), wherein the step consisting in laser engraving (E2) a second clearance zone (14) of the bearing (1) comprises a plurality of successive sub-steps, each sub-step consisting in engraving the bearing (1) blank (1a) in at least one plane distinct from the engraving of the preceding sub-steps.

4. The method as claimed in the preceding claim for manufacturing a pivot bearing (1), wherein said distinct planes of the various successive sub-steps are mutually parallel planes substantially parallel to the first face (11a) of the blank (1a), and are mutually superposed, extending between the first face (11a) of the blank and an intermediate plane (P5) positioned within the thickness of the bearing (1) blank (1a).

5. The method as claimed in the preceding claim for manufacturing a pivot bearing (1), wherein each sub-step of the step consisting in laser engraving (E2) employs an engraving circumscribed by a circular contour centered on the axis (A1) of said hole (10a) in a new distinct plane so that the step consisting in laser engraving (E2) generates a second clearance zone (14) formed by engraving superposed disks in distinct planes the diameter of which decreases between the upper face (11a) and the intermediate plane (P5), the engraving diameter in the intermediate plane (P5) being substantially equal to the diameter of the hole (10a).

6. The method as claimed in any one of claims 3 to 5 for manufacturing a pivot bearing (1), wherein the distance between two successive planes of said distinct planes is less than or equal to 2 µm, or even less than or equal to 1 µm.

7. The method as claimed in any one of the preceding claims for manufacturing a pivot bearing (1), wherein the step consisting in laser engraving (E2) a second clearance zone (14) of the bearing (1) employs engraving of a surface having some or all of the following features:
- the second clearance zone (14) forms a continuous spreading out or flaring out, with no edge, from the first pivot zone (13) of the bearing (1) to the first face (11) of the bearing (1);
- the second clearance zone (14) has a substantially frustoconical shape in the form of a frustum of a cone that is straight or has a curved surface, in particular having a radius of curvature tending toward infinity in the vicinity of the first face (11);
- the greatest diameter (dₑ) of the second clearance zone (14) is greater than four times, or even greater than seven times, the smallest diameter (dt) of the first pivot zone (13);
- the greatest section area of the second clearance zone (14) is greater than 10 times or 25 times or 30 times or 50 times the smallest section area of the first pivot zone (13);
- a first volume limited by the first pivot zone (13) and two planes (P2, P3) perpendicular to the axis (A1) is less than 0.4 times or 0.35 times or 0.3 times or 0.25 times the second volume limited by the second clearance zone (14) and two planes (P1, P2) perpendicular to the axis (A1) and/or a first volume limited by the first pivot zone (13) and two planes (P2, P3) perpendicular to the axis (A1) is greater than 0.1 times or 0.15 times or 0.2 times the second volume limited by the second clearance zone (14) and two planes (P1, P2) perpendicular to the axis (A1);
- the curves of intersection of the planes passing through the axis (A1) and perpendicular to the face (11) with the second clearance zone (14) are convex.

8. The method as claimed in any one of the preceding claims for manufacturing a pivot bearing (1), wherein the step consisting in removing material by means of wear (E3) uses a diamond thread.

9. The method as claimed in any one of the preceding claims for manufacturing a pivot bearing (1), wherein the step consisting in boring (E1) a hole (10a) in a bearing (1) blank (1a) utilizes a broaching tool or a laser.

10. The method as claimed in any one of the preceding claims for manufacturing a pivot bearing (1), wherein the step consisting in boring (E1) a hole (10a) in a bearing (1) blank (1a) comprises an enlarging sub-step (E12) consisting in imparting to the hole (10a) a diameter substantially equal to the smallest diameter (dt) of the first pivot zone (13) of the bearing (1).

11. The method as claimed in any one of the preceding claims for manufacturing a pivot bearing (1), wherein it comprises a step of turning (E13) the outside diameter (dₑₓₜ) of the bearing (1).

12. The method as claimed in any one of the preceding claims for manufacturing a pivot bearing (1), wherein it comprises a buffing or polishing finishing step (E4), in particular to reduce the roughness of the second clearance zone (14) of the bearing (1).

13. The method as claimed in any one of the preceding claims for manufacturing a pivot bearing (1), wherein it comprises a step consisting in round-off a second face (12a) of the blank (1a) opposite the first face (11a) so as to form a domed second face (12) of the bearing (1) and optionally to form a third clearance zone (15) in the extension of the hole (10a) of the blank (1a) at the level of the second face (12).

14. The method as claimed in any one of the preceding claims for manufacturing a pivot bearing (1), wherein it comprises a step of texturizing (E5) some or all of the second clearance zone (14) and/or some or all of the third clearance zone (15), in particular using a femtosecond laser, so that the first pivot zone (13) has a roughness different from that of the second clearance zone (14) and/or so that the first pivot zone (13) has an oleophilic surface and the second clearance zone (14) has, over all or part of it, an oleophobic surface.

15. The method as claimed in any one of the preceding claims for manufacturing a pivot bearing (1), wherein the blank (1a) is made of synthetic ruby or of polycrystalline corundum or of ceramic such as zirconia, in particular yttriated zirconia, or of a monocrystalline alumina, or of an alumina-zirconia combination.
